# EUROPÄISCHE PATENTSCHRIFT

(11) **EP 0 881 133 B1**
(45) Veröffentlichungstag und Bekanntmachung des Hinweises auf die Patenterteilung: **02.01.2002**
(21) Anmeldenummer: 98108791.9
(22) Anmeldetag: 14.05.1998
(51) Int. Cl.: B60R 22/46, B60R 22/26

(54) **Gurtstraffer eines Sicherheitsgurt-Rückhaltesystems**
Belt tightener of a seat belt restraint system
Prétensionneur de sangle d'un système de retenue par ceinture de sécurité

(30) Priorität: 14.05.1997 DE 19720206
(43) Veröffentlichungstag der Anmeldung: 02.12.1998
(73) Patentinhaber: HS Technik und Design Technische Entwicklungen GmbH, 82234 Wessling (DE)
(72) Erfinder: Specht, Martin, 82340 Feldafing (DE)
(74) Vertreter: Nöth, Heinz, Dipl.-Phys.

(56) Entgegenhaltungen:
- EP-A- 0 599 810
- EP-A- 0 734 922
- DE-A- 19 529 198
- DE-C- 4 414 031

## Beschreibung

Die Erfindung betrifft einen Gurtstraffer eines Sicherheitsgurt-Rückhaltesystems für ein Fahrzeug, insbesondere ein Kraftfahrzeug, nach dem Oberbegriff des Anspruchs 1.

Gurtstraffer werden eingesetzt, um im Falle einer übermäßigen Beschleunigung oder Abbremsung wie im Crashfall einen an einem zu sichernden Fahrzeuginsassen locker anliegenden Sicherheitsgurt in kürzester Zeit zu spannen oder zu straffen, so daß eine eventuell vorhandene Gurtlose beseitigt ist, bevor das Sicherheitsgurtband blockiert wird.

Aus der EP 0 685 371 A1 ist ein Gurtstraffer bekannt geworden, der eine pyrotechnische Treibladung zum Antreiben eines in einem zylindrischen Führungsrohr bewegbaren Kolbens aufweist, der wiederum über ein Zugseil mit einem Gurtschloß verbunden ist.

Aus der EP 0 599 810 B1 ist eine Vorrichtung zum Straffen eines Sicherheitsgurtes bekannt geworden, die eine vorgespannte Druckfeder als Kraftspeicher für die Rückstrammbewegung des Rückstrammers aufweist. Die Druckfeder ist in einem zylindrischen, rohrförmigen Gehäuse untergebracht, das am Fahrzeugsitz beispielsweise im Sitzkissenunterteil befestigt ist, oder das einstückig mit einer mit dem Sitz verstellbaren Oberschiene der Sitzhalterung gebildet ist. Eine Seilumlenkeinrichtung führt ein Zugseil von dem Rückstrammer zu einem Gurtschloß.

Aus der DE 195 29 198 A1 ist ein gattungsbildender pyrotechnischer Gurtstraffer bekannt geworden, der ein Gehäuse und einen mit dem Gehäuse verbundenen rohrförmigen Zylinder für einen durch Gasdruck verschiebbaren und eine Rücklaufsperre enthaltenden Kolben aufweist. Gemäß einem Ausführungsbeispiel kann der Zylinder in einem verschiebbaren oberen Teil einer Sitzschiene angeordnet und mit diesem verbunden sein, wobei die Sitzschiene so gehaltert werden kann, daß sie den Zylinder selbst bildet.

Aufgabe der vorliegenden Erfindung ist es, einen gattungsgemäßen Gurtstraffer derart weiterzubilden, daß er bei platzsparender Unterbringung am Sitz und bei einfachem Aufbau die erforderlichen Kräfte aufnehmen kann.

Diese Aufgabe wird durch einen Gurtstraffer mit den Merkmalen des Anspruchs 1 gelöst. Vorteilhafte Ausgestaltungen der Erfindung sind in den Unteransprüchen angegeben.

Die Integration der Führung des Antriebsteils in die verschiebbare Schiene der Sitzhalterung, die als Oberschiene bezeichnet werden kann, bietet eine besonders platzsparende Anordnung in dem ansonsten nicht genutzten Profilraum der Oberschiene. Der zentrale Teil der Oberschiene, der die Führung aufnimmt, kann einen beliebig geformten Querschnitt aufweisen, jedoch ist es besonders vorteilhaft, einen unrunden Querschnitt zu verwenden, da in diesem Fall eine Rotationsbewegung des Trägerelementes um die Längsachse eines als Führung verwendeten Führungsrohres ohne zusätzliche Abstützungsmaßnahmen verhindert wird, wenn vom Gurtschloß her eine bezüglich der Längsachse des Führungsrohres nichtradiale Zugkraft in das Trägerelement eingeleitet wird. Ein solcher unrunder Querschnitt kann z. B. elliptisch, dreieckig, rechteckig und insbesondere quadratisch sein.

Das Antriebsteil oder der Antriebskolben enthält eine Rücklaufsperre, die ihn daran hindert, sich aus der Strafferposition im Führungsrohr zurückzubewegen. Diese Rücklaufsperre kann sich an der Innenseite des Führungsrohres abstützen und durch Form- und/oder Reibschluß den Antriebskolben in Rückwärtsrichtung blockieren, wobei die Abstützung inbesondere an der Innenseite der Schiene an solchen Wandbereichen erfolgt, die an dem Führungsrohr anliegen und sich daran abstützen. Aus dieser funktionalen Anpassung zwischen dem Führungsrohr und der Sitzschiene und der sich daraus ergebenden Stützfunktion der Sitzschiene für das Führungsrohr des Gurtstraffers ergibt sich ein wesentlicher Vorteil der Erfindung.

Zweckmäßigerweise ist die Rücklaufsperre eine Kugelsperre, deren Kugeln sich in einem keilförmigen Raum zwischen dem Kolben und den Wänden des Führungsrohres an zwei gegenüberliegenden Wänden des Führungsrohres abstützen und somit den Kolben blockieren können. Durch die angesprochene Einpassung kann die Blockierkraft der Kugeln direkt von dem Führungsrohr in die Oberschiene eingeleitet werden. Damit kann das Führungsrohr dünnwandig ausgebildet sein, so daß der erfindungsgemäße Gurtstraffer weniger Gewicht aufweist.

Der Gurtstraffer kann mit jeder Art von Druck- oder Treibgas betrieben werden. So kann ein extern erzeugtes Druckgas in das Trägerelement zugeführt und an den Kolben in dem Führungsrohr, das auch als Druckrohr bezeichnet werden kann, weitergeleitet werden. Zweckmäßigerweise ist in dem Trägerelement ein Gasgenerator und insbesondere ein pyrotechnischer Gasgenerator bekannter Bauart enthalten, der ein kleines Bauvolumen aufweist und in dem Trägerelement vollständig und nach außen druckdicht integriert ist.

Das Trägerelement kann aus zwei z. B. spritzgegossenen Formteilhälften oder aus einem breiteren, biegesteifen Blechbiegeteil mit eingesetzten Führungen für das Zugseil und mit Druckgaskanälen sowie mit einer Abdeckung gebildet sein. Ein Teil des Trägerelements kann auch als integraler Teil des Führungsrohres gebildet sein.

Nachfolgend wird die Erfindung anhand eines Ausführungsbeispiels unter Bezugnahme auf Zeichnungen näher erläutert. Es zeigt:
- Fig. 1: in einer Längsschnittansicht einen erfindungsgemäßen Gurtstraffer;
- Fig. 2: in einer Querschnittansicht den Gurtstraffer gemäß Fig. 1;
- Fig. 3: in einer seitlichen Draufsicht den Gurtstraffer; und
- Fig. 4: in einer schaubildlichen Ansicht den Gurtstraffer gemäß der Erfindung.

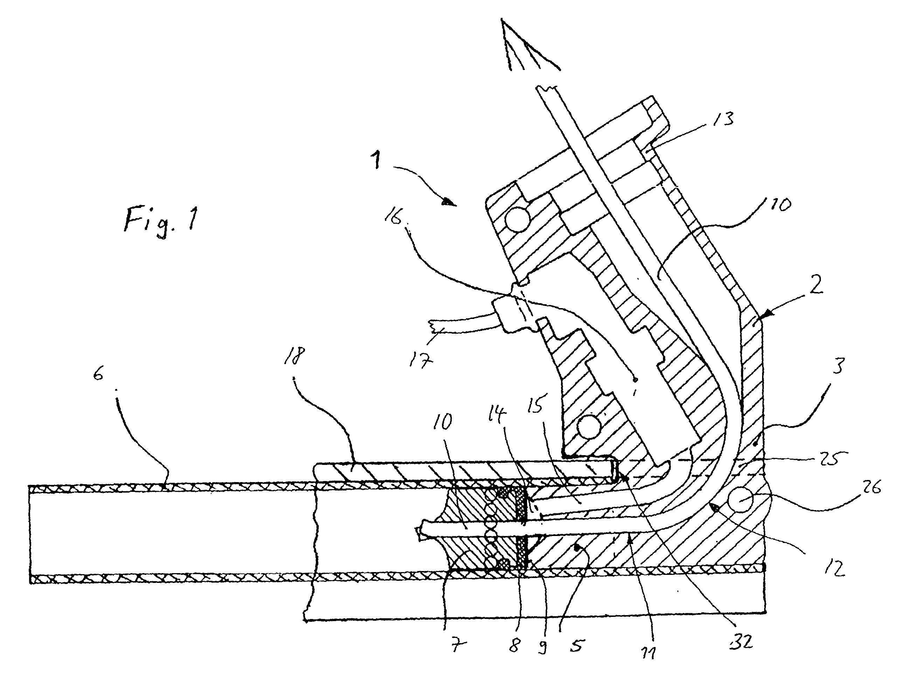

Ein erfindungsgemäßer Gurtstraffer 1 weist ein Halte- oder Trägerelement 2 auf, das beispielsweise aus zwei z. B. durch Schrauben, Nieten oder dergleichen verbundenen Halbschalen oder Formteilhälften 3, 4 gebildet ist. Das Trägerelement 2 enthält einen unteren, schaftförmigen, hervorstehenden Anschlußabschnitt 5 mit rechteckigem oder quadratischem Querschnitt, der in ein Führungsrohr 6 mit an den Anschlußabschnitt 5 angepaßtem Innenquerschnitt spielfrei eingeschoben oder eingepreßt und mit Preßpassung gehalten ist. In dem Führungsrohr 6 ist ein Antriebskörper oder Antriebskolben 7 enthalten, der einen an den Innenquerschnitt des Führungsrohres 6 angepaßten Querschnitt aufweist und über eine Kolbendichtung 8 an dem freien Ende 9 des Anschlußabschnitts 5 anliegt. Ein Zugseil 10 ist axial durch den Kolben 7 hindurchgeführt und z. B. durch Verpressen an ihm befestigt. Das z. B. als Doppelseil ausgebildete Zugseil 10 ist axial in einem Zugseilkanal 11 durch den Anschlußabschnitt 5 und anschließend über eine Zugseilumlenkung 12 zu einem oberen Anschlußabschnitt 13 des Trägerelementes 2 geführt, wo es mit einem Sicherheitsgurtschloß (nicht dargestellt) verbunden ist, das derart in Zugrichtung des Zugseils 10 verschiebbar gelagert ist, daß es durch die Zugkraft des Zugseiles 10 in Richtung auf den Anschlußabschnitt 13 des Trägerelementes 2 verlagert werden kann. Das zum Sicherheitsgurtschloß führende Zugseilstück verläuft gemäß der seitlichen Ansicht in Fig. 1 unter einem spitzen Winkel gegenüber dem Führungrohr 6. Diese Ausrichtung des Zugseiles entspricht grundsätzlich den in der EP 0 685 371 A1 sowie der EP 0 599 810 B1 beschriebenen Vorrichtungen.

An dem freien Ende 9 des Anschlußabschnitts 5 des Trägerelementes 2 ist eine Vertiefung 14 als Druckkammer ausgebildet, in die ein im Trägerelement 2 ausgebildeter Druckgaskanal 15 mündet, über den Druckgas zum Antreiben des Antriebskolbens 7 zugeführt werden kann. Das Druckgas kann auf verschiedene Arten erzeugt und zugeführt werden, z. B. von einem Druckgasspeicher über eine Anschlußleitung zum Trägerelement 2. Zweckmäßigerweise ist ein pyrotechnischer Gasgenerator 16 in einer entsprechenden Ausnehmung in dem Trägerelement 2 enthalten. Eine elektrische Anschlußleitung 17 verbindet ihn mit einer Sensoreinrichtung (nicht dargestellt), die die Auslösung steuert. Die Ausnehmung für den Gasgenerator 16 kann auch in dem Anschlußabschnitt 5 in unmittelbarer Nähe zu der Vertiefung 14 neben dem Zugseil 10 angeordnet sein.

Das Führungsrohr 6 des Antriebskolbens 7 ist in einer Oberschiene 18 einer Sitzhalterungs- und Verstelleinrichtung 19 aufgenommen. Die Oberschiene 18 ist auf Kugeln 20, die auf einer jeweiligen Führungsbahn 21 in einer zugehörigen unteren fahrzeugfesten Schiene 22 laufen, in bekannter Weise in axialer Richtung des Führungsrohres 6 längsverschiebbar gelagert. Ineinandergreifende Umbiegungen 23 und 24 der oberen bzw. der unteren Schiene 18 bzw. 22 bieten eine seitliche Führung bei seitlicher Belastung und bei Kippbelastung.

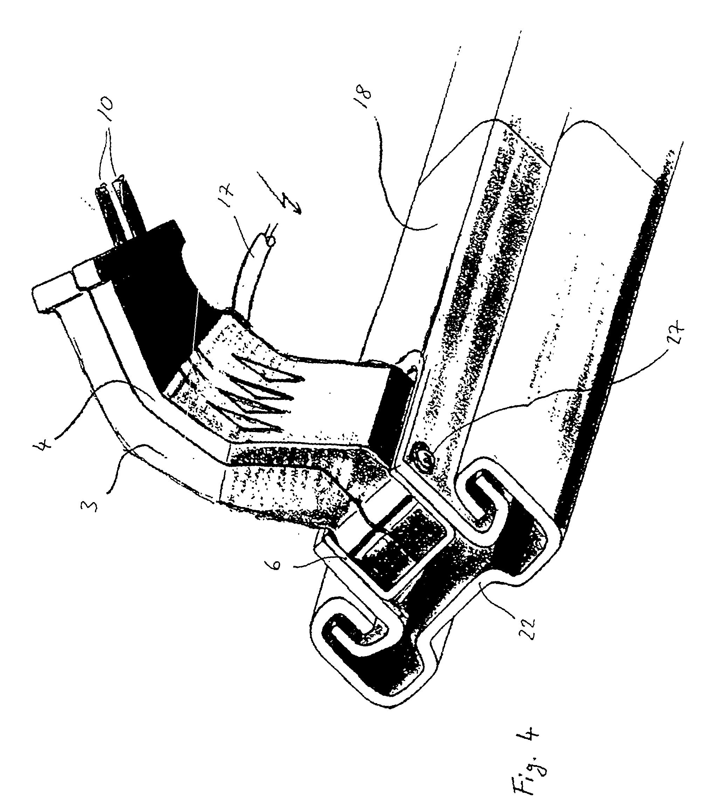

Die Oberschiene 18 weist in ihrem Zentralteil ein rechteckiges, nach unten offenes Querschnittsprofil auf, in das das quadratische Führungsrohr 6 spielfrei eingepaßt ist, wobei das vom Führungsrohr 6 nach oben abstehende Trägerelement 2 sich durch einen geöffneten Wandabschnitt 25 der Oberschiene 18 nach oben erstreckt. Die in axialer Richtung (bezüglich des Führungsrohres 6, siehe Fig. 3) seitlich gekröpfte Form des Trägerelementes 2 bietet eine korrekte Positionierung des Gurtschlosses neben der Sitzfläche im Bereich des Hüftpunktes, in welchem der Beckengurtbereich und der Schultergurtbereich bei mit dem Gurtschloß verriegeltem Sicherheitsgurt zusammenlaufen.

Eine durch das Trägerelement 2 und die zugeordneten Wände des Führungsrohres 6 verlaufende Durchgangsbohrung 26 nimmt eine Schraube 27, Niete oder dergleichen auf, die das Trägerelement 2 und das Führungsrohr 6 in der Oberschiene 18 befestigt hält.

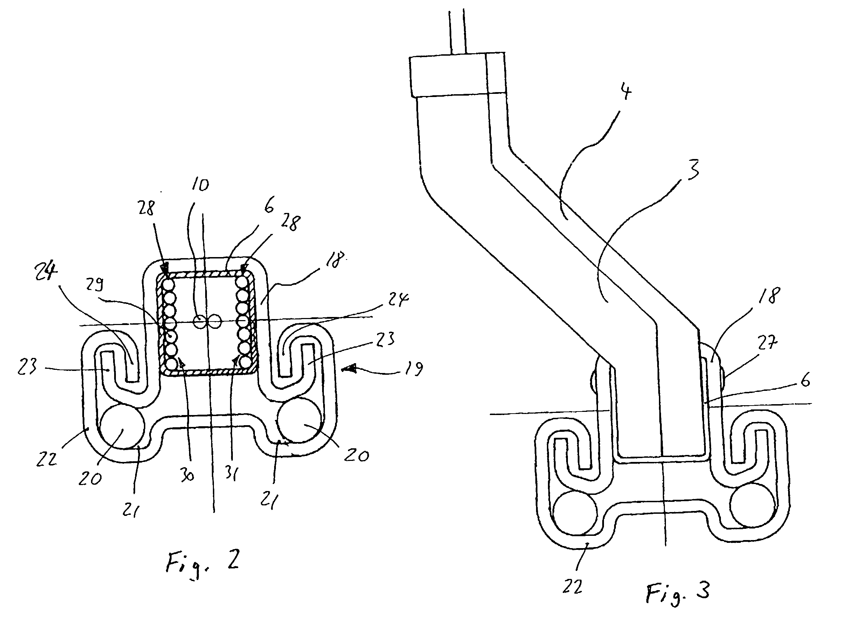

In dem Antriebskolben 7 ist eine Rücklaufsperre 28 integriert, die als Kugelsperre ausgebildet ist. An den zwei sich gegenüberliegenden vertikalen Seiten 30, 31 des Antriebskolbens 7 (siehe Fig. 2) ist jeweils eine keilförmig abgeschrägte Ausnehmung (nicht dargestellt) vorgesehen, die sich zum Anschlußabschnitt 5 hin vertieft und mehrere Kugeln 29 enthält, die sich bei einer axialen Bewegung des Antriebskolbens 7 (aus seiner in Fig. 1 dargestellten Ruhestellung nach links im Führungsrohr 6) in dem tiefsten Bereich befinden, wo sie mit geringem Spiel zur angrenzenden Wand des Führungsrohres 6 angeordnet sind, und bei einer anschließenden entgegengesetzten Bewegung des Antriebskolbens 7 sich sofort durch Reibung an der Wand des Führungsrohres 6 in den sich verjüngenden Abschnitt der Ausnehmung bewegen und sich gegen die Wand des Führungsrohres 6 drücken, so daß der Antriebskolben 7 blockiert ist.

Wenn die Sensoreinrichtung eine Druck- oder Treibgaszuführung in den Druckkanal 15 auslöst, wird der Antriebskolben 7 in dem Führungs- oder Druckrohr 6 aus der in Fig. 1 dargestellten Position nach links (d. h. an der Sitzhalterung nach vorne) beschleunigt, wobei gleichzeitig über das mitbewegte Zugseil 10 das Gurtschloß ruckartig abwärts verlagert wird, so daß der Sicherheitsgurt gespannt und eine eventuell vorhandene Gurtlose beseitigt wird. In seiner im Führungsrohr 6 nach links bewegten Strafferendstellung greift bei beginnender Rückbewegung die Rücklaufsperre 28 ein und blockiert den Antriebskolben 7 in dem Führungsrohr 6. Die Kugeln 29 der Rücklaufsperre 28 drücken sich dabei gegen die gegenüberliegenden Wände des Führungsrohres 6, das sich wiederum in der stabilen Oberschiene 18 abstützt. Daher kann die Wandstärke des Führungsrohres 6 vergleichsweise dünn ausgebildet sein, beispielsweise kann eine übliche Wandstärke von etwa 3 bis 4 mm auf etwa 0,6 bis 0,7 mm reduziert werden. Da das Führungsrohr 6 einen rechteckigen Querschnitt aufweist, kann eine Rotations- oder Torsionsbewegung um die Längsachse des Führungsrohres 6 verhindert werden, so daß die Position des Trägerelementes 2 des Gurtstraffers in Relation zum Fahrzeuginsassen gewahrt bleibt.

Die auf das Trägerelement 2 eingeleitete Zugkraft wird formschlüssig sowohl durch den Anschlußschaft 5 über das Führungsrohr 6 als auch über die Schraube oder Niete 27 in die Oberschiene 18 eingeleitet. Zum Zweck der verbesserten Krafteinleitung weist das Trägerelement 2 eine schlitzförmige Ausnehmung 32 angrenzend an den Anschlußschaft 5 ausgebildet, so daß der Anschlußschaft 5 weit in die Oberschiene 18 eingreifen kann. Durch diese Aufteilung der Krafteinleitung können die Bauteile schwächer und somit leichter dimensioniert werden gegenüber der bekannten Befestigung mit einer zentralen lasttragenden Schraube durch das Trägerelement 2.

Wenn die Größe des Zugseilkanals 11 genau an den Querschnitt des Zugseils 10 angepaßt ist, bildet er gleichzeitig eine Abdichtung gegen Austritt von Druck- oder Treibgas entlang dem Zugseil 10 durch das Trägerelement 2. Wenn die beiden Formteilhälften 3, 4 aus vollem Material (z. B. aus Spritzguß) mit eingeformten Kanälen und Ausnehmungen hergestellt ist, ergibt sich insbesondere im Bereich der Zugseilumlenkung 12 ein sehr steifer, lasttragender Füllkörper für eine Vernietung oder sonstige Verbindung der beiden Formteilhälften 3, 4 miteinander sowie mit dem Führungsrohr 6 und der Oberschiene 18. Jedoch kann auch ein Teil oder eine Formteilhälfte mit dem Führungsrohr z. B. als Blechbiegeteil integral gebildet sein, wobei die zweite Formteilhälfte zur Komplettierung daran befestigt wird. Der zentrale Teil der Oberschiene 18 kann statt der in Fig. 2 dargestellten annähernd quadratischen Form einen flacheren und breiteren Rechteckquerschnitt aufweisen, worin dann ein daran angepaßtes Führungsrohr eingepaßt ist.

## Patentansprüche

1. Gurtstraffer eines Sicherheitsgurt-Rückhaltesystems in einem Fahrzeug, insbesondere einem Kraftfahrzeug,
mit einem Trägerelement (2), an dem eine Führung (6) mit einem darin verschiebbar aufgenommenen Antriebsteil (7) zum Bewegen eines Zugseils (10) angeschlossen ist und das eine Zugseilumlenkung (12) aufweist,
mit einem mit dem Zugseil (10) verbundenen Gurtschloß und mit einem Gasgenerator zum Freisetzen eines das Antriebsteil (7) bewegenden Treibgases,
wobei das Antriebsteil (7) eine Rücklaufsperre (28) aufweist und die Führung in einer mit einem Fahrzeugsitz gekoppelten und zur Sitzeinstellung verschiebbaren Schiene (18) einer Sitzhalterung (19) enthalten ist, wobei
die Führung ein Führungsrohr (6) ist, das in die Schiene (18) mit an dieser anliegenden Wandbereichen eingepaßt oder integriert ist,
**dadurch gekennzeichnet,**
**daß** sich die Rücklaufsperre (28) an der Innenseite von an der Schiene (18) anliegenden Wandbereichen des Führungsrohres (6) abstützt.

2. Gurtstraffer nach Anspruch 1, **dadurch gekennzeichnet, daß** das Führungsrohr (6) einen unrunden, insbesondere rechteckigen Querschnitt aufweist.

3. Gurtstraffer nach Anspruch 1 oder 2, **dadurch gekennzeichnet, daß** das Trägerelement (2) aus zwei Formteilhälften (3, 4) gebildet ist und die Zugseilumlenkung (12) sowie einen unteren und einen oberen Anschlußabschnitt (5 bzw. 13) zum Anbringen der Führung (6) für das Antriebsteil (7) bzw. des Gurtschlosses und den Gasgenerator integriert enthält.

4. Gurtstraffer nach einem der Ansprüche 1 bis 3, **dadurch gekennzeichnet, daß** die Rücklaufsperre (28) eine Kugelrücklaufsperre (28) ist.

5. Gurtstraffer nach Anspruch 4, **dadurch gekennzeichnet, daß** sich die Kugeln (29) der Kugelrücklaufsperre (28) an zwei gegenüberliegenden Wandbereichen des Führungsrohres (6) abstützen.

6. Gurtstraffer nach einem der Ansprüche 1 bis 5, **dadurch gekennzeichnet, daß** die Wandstärke des Führungsrohres (6) deutlich geringer ist wie jene der Schiene (18).

7. Gurtstraffer nach einem der Ansprüche 1 bis 6, **dadurch gekennzeichnet, daß** der schaftförmig gebildete Anschlußbereich (5) des Trägerelementes (2) im Führungsrohr (6) befestigt ist, insbesondere in das Führungsrohr (6) eingepreßt ist.

8. Gurtstraffer nach einem der Ansprüche 1 bis 7, **dadurch gekennzeichnet, daß** das Trägerelement (2) und das Führungsrohr (6) durch ein Formschlußelement (26, 27) an der Schiene (18) gesichert sind.

9. Gurtstraffer nach einem der Ansprüche 1 bis 8, **dadurch gekennzeichnet, daß** das Trägerelement (2) gekröpft ist.

10. Gurtstraffer nach einem der Ansprüche 3 bis 9, **dadurch gekennzeichnet, daß** zumindest eine der Formteilhälften (3, 4) des Trägerelementes (2) ein biegesteifes Teil, insbesondere ein Blechbiegeteil ist.

11. Gurtstraffer nach einem der Ansprüche 3 bis 10, **dadurch gekennzeichnet, daß** ein Teil oder eine der Formteilhälften (3, 4) des Trägerelementes (2) integraler Teil des Führungsrohres (6) ist.

12. Gurtstraffer nach einem der Ansprüche 1 bis 11, **dadurch gekennzeichnet, daß** der Gasgenerator (16) ein pyrotechnischer Gasgenerator ist.

13. Gurtstraffer nach einem der Ansprüche 1 bis 12, **dadurch gekennzeichnet, daß** der Gasgenerator (16) in einer Ausnehmung im Bereich des Anschlußschaftes (5) des Trägerelements (2) angeordnet ist.

## Claims

1. Belt tensioner of a seat belt restraint system in a vehicle, in particular a motor vehicle, with a carrier element (2), on which a guide (6) with a drive part (7) displaceably received therein for moving a traction cable (10) is connected and which has a traction cable deflection (12), with a belt buckle connected to the traction cable (10) and with a gas generator for releasing a propellant gas moving the drive part (7), wherein the drive part (7) has a reverse movement lock (28) and the guide is contained in a rail (18) of a seat mount (19) which is coupled to a vehicle seat and displaceable for seat adjustment, wherein the guide is a guide pipe (6) which is inserted or integrated into the rail (18) with wall regions adjacent thereto, **characterised in that** the reverse movement lock (28) is supported on the inside of wall regions of the guide pipe (6) adjacent to the rail (18).

2. Belt tensioner according to claim 1, **characterised in that** the guide pipe (6) has a non-circular, in particular rectangular cross-section.

3. Belt tensioner according to claim 1 or 2, **characterised in that** the carrier element (2) is formed from two moulding halves (3, 4) and contains, in an integrated manner, the traction cable deflection (12) and a lower and upper connection portion (5 and 13) for attaching the guide (6) for the drive part (7), or the belt buckle, and the gas generator.

4. Belt tensioner according to any one of claims 1 to 3, **characterised in that** the reverse movement lock (28) is a ball reverse movement lock (28).

5. Belt tensioner according to claim 4, **characterised in that** the balls (29) of the ball reverse movement lock (28) are supported on two opposing wall regions of the guide pipe (6).

6. Belt tensioner according to any one of claims 1 to 5, **characterised in that** the wall thickness of the guide pipe (6) is significantly less than that of the rail (18).

7. Belt tensioner according to any one of claims 1 to 6, **characterised in that** the shaft-shaped connection region (5) of the carrier element (2) is fastened in the guide pipe (6), in particular is pressed into the guide pipe (6).

8. Belt tensioner according to any one of claims 1 to 7, **characterised in that** the carrier element (2) and the guide pipe (6) are secured to the rail (18) by an interlocking element (26, 27).

9. Belt tensioner according to any one of claims 1 to 8, **characterised in that** the carrier element (2) is bent at right angles.

10. Belt tensioner according to any one of claims 3 to 9, **characterised in that** at least one of the moulding halves (3, 4) of the carrier element (2) is a part which is resistant to bending, in particular a sheet metal bent part.

11. Belt tensioner according to any one of claims 3 to 10, **characterised in that** a part or one of the moulding halves (3, 4) of the carrier element (2) is an integral part of the guide pipe (6).

12. Belt tensioner according to any one of claims 1 to 11, **characterised in that** the gas generator (16) is a pyrotechnic gas generator.

13. Belt tensioner according to any one of claims 1 to 12, **characterised in that** the gas generator (16) is arranged in a recess in the region of the connecting shaft (5) of the carrier element (2).

## Revendications

1. Tendeur d'une ceinture d'un système de retenue à ceinture de sécurité dans un véhicule, en particulier un véhicule automobile, comportant un élément de support (2) sur lequel est raccordé un guidage (6) avec un élément d'entraînement qui y est reçu de manière mobile (7) en vue d'un déplacement d'un câble de traction (10), et comportant un dispositif de déviation du câble de traction (12), une boucle de la ceinture reliée au câble de traction (10) et un générateur de gaz destiné à dégager un gaz propulseur entraînant le déplacement de l'élément d'entraînement (7), l'élément d'entraînement (7) comportant un blocage de retour (28), le guidage étant contenu dans un rail (18) d'un support du siège (19) accouplé au siège du véhicule et pouvant être déplacé par rapport au réglage du siège, le guidage étant constitué par un tube de guidage (6), ajusté ou intégré dans le rail (18) avec des sections de paroi adjacentes à celui-ci, **caractérisé en ce que** le blocage de retour (28) est supporté sur le côté interne de sections de paroi du tube de guidage (6) adjacentes au rail (18).

2. Tendeur de ceinture selon la revendication 1, **caractérisé en ce que** le tube de guidage (6) a une section transversale non circulaire, en particulier rectangulaire.

3. Tendeur de ceinture selon les revendications 1 ou 2, **caractérisé en ce que** l'élément de support (2) est formé à partir de deux moitiés moulées (3, 4), contenant, de façon intégrale, le dispositif de déviation du câble de traction (12) ainsi q'une section de raccordement inférieure et supérieure (5 et 13) pour l'agencement du guidage (6) de l'élément d'entraînement (7) et de la boucle de la ceinture et le générateur de gaz.

4. Tendeur de ceinture selon les revendications 1 à 3, **caractérisé en ce que** le blocage de retour (28) est un blocage de retour à billes (28).

5. Tendeur de ceinture selon la revendication 4, **caractérisé en ce que** les billes (29) du blocage de retour à billes (28) sont supportées sur deux sections de paroi opposées du tube de guidage (6),

6. Tendeur de ceinture selon les revendications 1 à 5, **caractérisé en ce que** l'épaisseur de paroi du tube de guidage (6) est nettement inférieure à celle du rail (18).

7. Tendeur de ceinture selon les revendications 1 à 6, **caractérisé en ce que** la section de raccordement en forme de tige (5) de l'élément de support (2) est fixée dans le tube de guidage (6), et qu'elle est en particulier insérée par pression dans le tube de guidage (6).

8. Tendeur de ceinture selon les revendications 1 à 7, **caractérisé en ce que** l'élément de support (2) et le tube de guidage (6) sont fixés par un élément à engagement positif (26, 27) sur le rail (18).

9. Tendeur de ceinture selon les revendications 1 à 8, **caractérisé en ce que** l'élément de support (2) est coudé.

10. Tendeur de ceinture selon les revendications 3 à 9, **caractérisé en ce qu'**au moins une des moitiés moulées (3, 4) de l'élément de support (2) est constituée par une pièce résistante à la flexion, en particulier par une pièce de tôle pliée.

11. Tendeur de ceinture selon les revendications 3 à 10, **caractérisé en ce qu'**une partie ou une des moitiés moulées (3, 4) de l'élément de support (2) fait partie intégrante du tube de guidage (6).

12. Tendeur de ceinture selon les revendications 1 à 11, **caractérisé en ce que** le générateur de gaz (16) est un générateur de gaz pyrotechnique.

13. Tendeur de ceinture selon les revendications 1 à 12, **caractérisé en ce que** le générateur de gaz (16) est agencé dans un évidement dans la région de la tige de raccordement (5) de l'élément de support (2).
